# EUROPÄISCHE PATENTANMELDUNG

(11) **EP 0 536 485 A2**
(43) Veröffentlichungstag der Anmeldung: **14.04.1993**
(21) Anmeldenummer: 92112451.7
(22) Anmeldetag: 21.07.1992
(51) Int. Cl.: G01D 13/28, G01D 11/28, G01D 7/08, G01P 1/08

(54) **Vorrichtung zum analogen Anzeigen von Messwerten**

(71) Anmelder: Moto Meter AG, D-71229 Leonberg (DE)
(72) Erfinder: Erlewein, Jürgen, Dr., W-7000 Stuttgart (DE); Dagenbach, Stefan, Dr., W-7016 Gerlingen (DE); Kolmorgen, Stefan, W-7267 Unterreichenbach (DE)
(74) Vertreter: Friedmann, Jürgen, Dr.-Ing.

(57) **Zusammenfassung**

Eine Vorrichtung zum analogen Anzeigen von Meßwerten eines Meßwerks, insbesondere an der Armaturentafel eines Kraftfahrzeugs, umfaßt ein den Meßwerten entsprechendes Zifferblatt (9), einen vom Meßwerk (2) angetriebenen, einen Nabenteil (7) aufweisenden Zeiger (5), wobei Zeiger (5) und Nabenteil aus einem lichtleitenden Material bestehen, und der Zeiger am Nabenteil über dem Zifferblatt verdrehbar gelagert ist, sowie eine an den Zeiger (5) angekoppelte Lichtquelle (14,15,23) zur Beleuchtung desselben. Das Licht aus der Lichtquelle (14,15,23) wird dabei unmittelbar in Achsrichtung des Zeigers (5) und im wesentlichen zentral in den Nabenteil (7) eingekoppelt.

## Beschreibung

Die Erfindung betrifft eine Vorrichtung zum analogen Anzeigen von Meßwerten eines Meßwerks, insbesondere an der Armaturentafel eines Kraftfahrzeuges, mit einem den Meßwerten entsprechenden Zifferblatt, mit einem vom Meßwerk angetriebenen, einen Nabenteil aufweisenden Zeiger, wobei Zeiger und Nabenteil aus einem lichtleitenden Material bestehen, und der Zeiger am Nabenteil über dem Zifferblatt verdrehbar gelagert ist, und mit einer an den Zeiger angekoppelten Lichtquelle zur Beleuchtung des Zeigers.

Bei bekannten Vorrichtungen dieser Art ist ein das Zifferblatt tragender Träger als Lichtleiter ausgebildet, der unter Freilassung eines ringförmigen Abstandsbereiches zentral von einer ebenfalls als Lichtleiter ausgebildeten Welle des Zeigers durchdrungen ist. In den lichtleitenden Träger des Zifferblatts wird, gewöhnlich wiederum über einen weiteren Lichtleiter, Licht einer Lichtquelle eingeleitet, welches der Beleuchtung des Zifferblatts dient. Ein Teil des sich im lichtleitenden Träger ausbreitenden Streulichts wird in die Welle des Zeigers eingekoppelt und gelangt von da unter mehrfacher Brechung und Streuung in den Zeiger, um diesen zu beleuchten. Aufgrund der dabei, insbesondere wegen der relativ langen Wege, unvermeidlichen Lichtverluste, ist die Beleuchtungsstärke des Zeigers relativ gering.

Es ist Aufgabe der Erfindung, diesem Mangel einer gattungsgemäßen Vorrichtung abzuhelfen und den Zeiger so hell auszuleuchten, daß seine Beleuchtungsstärke um ein Mehrfaches erhöht und seine Position über dem Zifferblatt sicher erkennbar ist.

Die Aufgabe wird erfindungsgemäß dadurch gelöst, daß das Licht aus der Lichtquelle in Achsrichtung des Zeigers und im wesentlichen zentral in den Nabenteil eingekoppelt ist.

Auf diese Weise gelangt das Licht der Lichtquelle unmittelbar in den Zeiger, so daß dieser - auch mit Hilfe relativ schwacher Lichtquellen - außerordentlich hell ausleuchtbar ist.

Die nachstehende Beschreibung bevorzugter Ausführungsformen der Erfindung dient im Zusammenhang mit beiliegender Zeichnung der weiteren Erläuterung. Es zeigen:
- Fig. 1: schematisch eine Vorrichtung zum analogen Anzeigen von Meßwerten mit beleuchtetem Zeiger;
- Fig. 2: eine Draufsicht auf den Zeiger aus Fig. 1;
- Fig. 3: eine abgewandelte Ausführungsform der Vorrichtung aus Fig. 1 und
- Fig. 4: in Draufsicht ein Zifferblatt für eine Vorrichtung zum analogen Anzeigen von Meßwerten mit zwei Skalenbereichen und einem einzigen Zeiger in zwei verschiedenen Positionen.

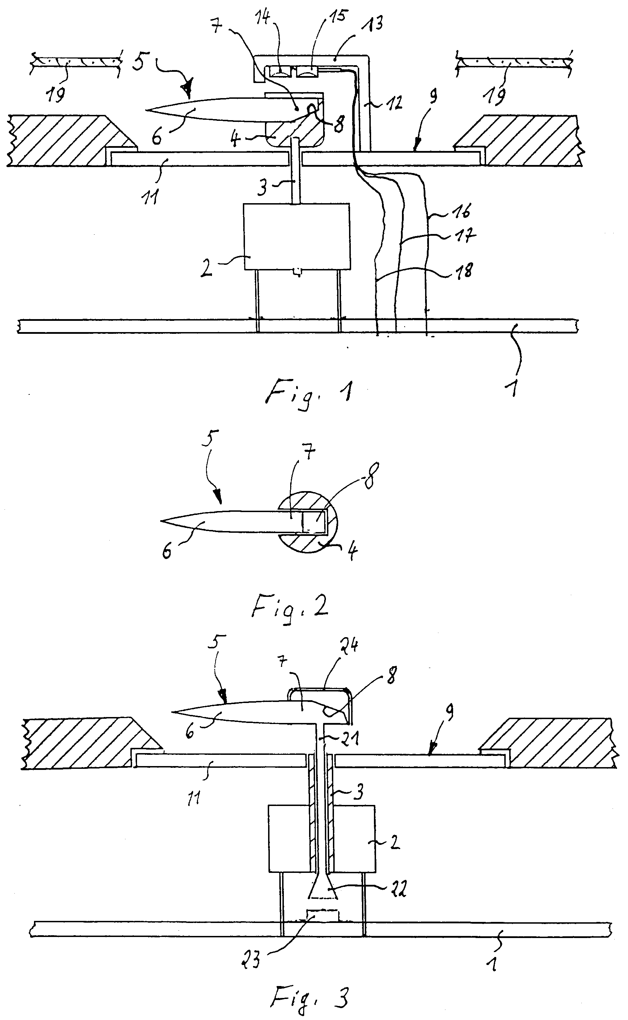

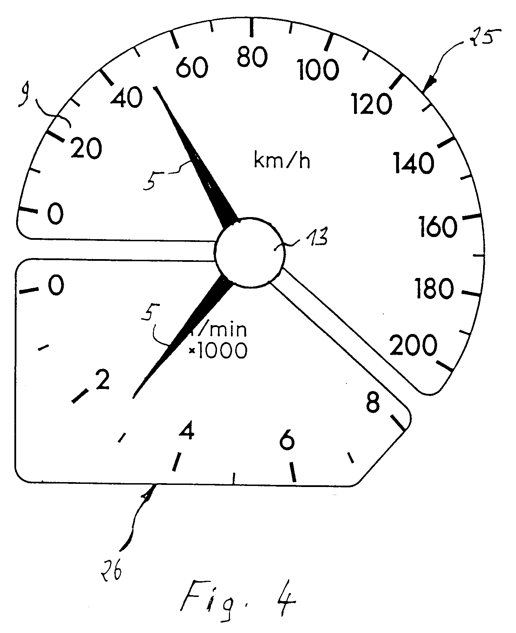

Die Fig. 1 zeigt schematisch den grundsätzlichen Aufbau einer Vorrichtung zum analogen Anzeigen von Meßwerten, die beispielsweise an der Armaturentafel eines Kraftfahrzeuges angeordnet ist. An einer Basis 1 ist ein Meßwerk 2, beispielsweise ein Geschwindigkeits- oder Drehzahl-Meßwerk eines Kraftfahrzeuges befestigt. Eine vom Meßwerk 2 meßwertabhängig angetriebene Welle 3 trägt an ihrem freien Ende ein Lagerteil 4, in dem ein Zeiger 5 aus lichtleitendem Material befestigt ist. Der Zeiger 5 besteht in herkömmlicher Weise aus einem in eine Spitze auslaufenden Zeigerabschnitt 6 und einem damit verbundenen Nabenteil 7, mit welchem der Zeiger im Lagerteil 4 freitragend abgestützt ist. Im Nabenteil 7 ist eine schräg verlaufende, lichtreflektierende Fläche 8 ausgebildet.

Der vom Meßwerk 2 über die Welle 3 angetriebene Zeiger 5 ist über einem Zifferblatt 9 in üblicher Weise meßwertabhängig verdrehbar. Das Zifferblatt 9 ist seinerseits auf der Oberseite eines Zifferblatt-Trägers 11 angeordnet, beispielsweise im Siebdruckverfahren aufgebracht. Das Zifferblatt 9 ist, wie aus Fig. 4 ersichtlich, sektorförmig ausgebildet, d.h. der Meß- oder Drehbereich des Zeigers 5 erstreckt sich nicht über 360, sondern lediglich über etwa 240°.

In demjenigen Bereich des Zifferblatt-Trägers 11, der von dem Zeiger 5 nicht überstrichen wird, ist mit Hilfe eines Ständers 12 eine den Nabenteil 7 des Zeigers 5 überragende Abdeckung 13 fest angeordnet. An der Unterseite der Abdeckung 13 sind zwei Lichtquellen 14, 15 - in Gestalt üblicher Leuchtdioden oder Glühlampen - so befestigt, daß das aus ihnen austretende Licht in Achsrichtung des Zeigers 5 unmittelbar und im wesentlichen zentral in den Nabenteil 7 und von da nach entsprechender Umlenkung an der reflektierenden Fläche 8 in den Zeigerabschnitt 6 eintritt. Auf diese Weise ist eine außerordentlich kräftige Ausleuchtung des Zeigers 5 möglich. Die Lichtquellen 14, 15 sind über elektrische Leitungen 16, 17 und 18 an eine Stromquelle anschließbar.

Bei der in Fig. 1 dargestellten Vorrichtung sind an der Abdeckung 13 zwei Lichtquellen 14, 15 angeordnet, die verschiedenfarbiges Licht erzeugen können. Auf diese Weise kann, je nachdem, welche der Lichtquellen 14, 15 eingeschaltet ist, der Zeiger 5 mit unterschiedlichen Farben, gegebenenfalls auch Mischfarben, hell beleuchtet werden, wobei die eine Lichtquelle beispielsweise einem kleineren Geschwindigkeitsbereich, insbesondere unterhalb 50 km/h und die andere Lichtquelle einem größere Geschwindigkeiten umfassenden Zifferblattbereich zugeordnet sein können. Sobald der Zeiger in den jeweils anderen Bereich eintritt, erfolgt über an sich bekannte elektrische Abtast- und Schaltmittel eine Umschaltung der Lichtquellen 14, 15. Statt unterschiedlicher Farben könnten auch unterschiedliche Intensitäten der Lichtquelle verwendet werden.

Grundsätzlich ist es selbstverständlich möglich, an der Unterseite der Abdeckung 13 nur eine einzige Lichtquelle zentral über den Nabenteil 7 anzuordnen, deren Licht in Achsrichtung des Zeigers in den Nabenteil eingekoppelt wird.

Gewöhnlich ist eine Vorrichtung der in Fig. 1 schematisch dargestellten Art mit einem durchsichtigen Abdeckglas 19 versehen, welches in Fig. 1 schematisch und abgebrochen dargestellt ist. Es ist möglich, eine oder mehrere Lichtquellen 14, 15 an der Unterseite dieses Abdeckglases 19 unter entsprechender Abdeckung nach oben anzuordnen. In diesem Falle kann der auf dem Zifferblatt-Träger 11 abgestützte Ständer 12 entfallen.

In Fig. 1 sind die Lichtquellen 14, 15 an der dem Zifferblatt 9 abgewandten Seite des Nabenteils 7 zentral und unmittelbar über diesem Teil angeordnet. Bei der in Fig. 2 dargestellten, abgewandelten Ausführungsform ist die vom Meßwerk 2 angetriebene Welle 3 als Hohlwelle ausgebildet. Durch diese Hohlwelle verläuft ein Lichtleiter 21, an dem der den Zeigerabschnitt 6 tragenden Nabenteil 7 befestigt ist. Der Lichtleiter 21 ist drehfest mit der Welle 3 verbunden. Ein unten aus der Welle 3 herausragendes, konisch erweitertes Ende 22 des Lichtleiters 21 liegt einer oder mehreren, auf der Basis 1 befestigten Lichtquellen 23 gegenüber, deren Licht auf diese Weise in Achsrichtung des Zeigers 5 und zentral direkt in den Nabenteil 7 und von da über die schräge Fläche in den Zeigerabschnitt 6 eingekoppelt ist. Auch auf diese Weise läßt sich eine außerordentlich lichtstarke Ausleuchtung des Zeigers 5 erreichen.

Bei einer anderen, nicht dargestellten Ausführungsform ist es auch möglich, eine Lichtquelle seitlich vom Zeiger 5 und unmittelbar unterhalb des Zifferblatt-Trägers 11 vorzusehen und das aus dieser Lichtquelle austretende Licht in herkömmlicher Weise über einen Lichtleiter durch den Träger 11 hindurch zu leiten und von oben her in den Nabenteil 7 des Zeigers 5 zentral und axial einzukoppeln.

In Fig. 4 ist ein kombiniertes Zifferblatt dargestellt, das zwei separate Skalenbereiche 25, 26 umfaßt, die verschiedenen Meßwerten, nämlich Fahrgeschwindigkeit eines Kraftfahrzeuges bzw. Drehzahl eines Kraftfahrzeugmotors zugeordnet sind. Der Skalenbereich 25 entspricht dem bereits erwähnten Zifferblatt 9. Den beiden Skalenbereichen 25, 26 ist gemeinsam der Zeiger 5 zugeordnet, der zentral über den Skalenbereichen 25, 26 verdrehbar ist. An der Unterseite der Abdeckung 13 sind eine oder mehrere Lichtquellen 14, 15 vorgesehen, welche den Zeiger 5 in der beschriebenen Art und Weise beleuchten.

Die Anzeige von Meßwerten auf dem die Skalenbereiche 25, 26 aufweisenden, kombinierten Zifferblatt geschieht in folgender Weise: der Zeiger 5, der in diesem Fall nicht mit einem Meßwerk 2 verbunden und von diesem Meßwert unabhängig angetrieben ist, rotiert in der gleichen Richtung mit konstanter Drehgeschwindigkeit ständig über den Skalenbereichen 25, 26. Die Einschaltphasen der unter der Abdeckung 13 angeordneten Lichtquellen 14, 15 werden meßwertabhängig gesteuert, so daß der Zeiger 5 stroboskopisch jeweils nur über der dem anzuzeigenden Meßwert entsprechenden Stelle der Skalenbereiche 25, 26 beleuchtet und somit sichtbar ist. Wegen der stroboskopischen Beleuchtung des Zeigers 5 scheint dieser an der dem betreffenden Meßwert entsprechenden Stelle stillzustehen.

Man kann für die phasenabhängige Beleuchtung des Zeigers 5 innerhalb des Skalenbereiches 25 eine andere Farbe vorsehen als im Skalenbereich 26.

Es ist weiterhin selbstverständlich auch möglich, nur einen einzigen Skalenbereich, also beispielsweise den dem Zifferblatt 9 entsprechenden Skalenbereich 25 vorzusehen und den Zeiger lediglich über diesem Zifferblatt in der beschriebenen Weise stroboskopisch auszuleuchten.

Ferner ist es grundsätzlich möglich, auch mehr als zwei Skalenbereiche 25, 26 vorzusehen und einen einzigen, gleichmäßig rotierenden Zeiger 5 über diesen Bereichen meßwertabhängig stroboskopisch zu beleuchten.

## Patentansprüche

1. Vorrichtung zum analogen Anzeigen von Meßwerten eines Meßwerks, insbesondere an der Armaturentafel eines Kraftfahrzeugs, mit einem den Meßwerten entsprechenden Zifferblatt, mit einem vom Meßwerk angetriebenen, einen Nabenteil aufweisenden Zeiger, wobei Zeiger und Nabenteil aus einem lichtleitenden Material bestehen, und der Zeiger am Nabenteil über dem Zifferblatt verdrehbar gelagert ist, und mit einer an den Zeiger angekoppelten Lichtquelle zur Beleuchtung des Zeigers,
**dadurch gekennzeichnet,**
daß das Licht aus der Lichtquelle (14, 15, 23) in Achsrichtung des Zeigers (5) und im wesentlichen zentral in den Nabenteil (7) eingekoppelt ist.

2. Vorrichtung nach Anspruch 1, dadurch gekennzeichnet,
daß die Lichtquelle (14, 15) an der dem Zifferblatt (9) abgewandten Seite des Nabenteils (7) zentral unmittelbar über dem Nabenteil angeordnet ist.

3. Vorrichtung nach Anspruch 1, dadurch gekennzeichnet,
daß der Nabenteil (7) an einer Hohlwelle (3) befestigt und durch diese Hohlwelle hindurch von einer hinter dem Zifferblatt (9) angeordneten Lichtquelle (23) beleuchtet ist.

4. Vorrichtung nach Anspruch 1, dadurch gekennzeichnet,
daß mehrere verschiedenfarbige Lichtquellen (14, 15) vorgesehen sind, die abwechselnd oder gemeinsam einschaltbar sind, und deren Licht in den Nabenteil einkoppelbar ist.

5. Vorrichtung nach Anspruch 1, dadurch gekennzeichnet,
daß die Lichtquellen (14, 15, 23) als Leuchtdioden ausgebildet sind.

6. Vorrichtung nach Anspruch 4, dadurch gekennzeichnet,
daß die Farbe und/oder die Lichtstärke der Lichtquellen (14, 15, 23) in Abhängigkeit von einer bestimmten Meßgröße, insbesondere einem Schwellenwert des angezeigten Meßwerts verstellbar ist.

7. Vorrichtung nach Anspruch 1, dadurch gekennzeichnet,
daß der Zeiger (5) über dem Zifferblatt (9) ständig mit konstanter Drehgeschwindigkeit rotiert, und die Einschaltphasen der Lichtquelle meßwertabhängig gesteuert sind, so daß der Zeiger stroboskopisch jeweils nur über der dem anzuzeigenden Meßwert entsprechenden Stelle des Zifferblatts beleuchtet ist.

8. Vorrichtung nach Anspruch 7, dadurch gekennzeichnet,
daß das Zifferblatt (9) wenigstens zwei, verschiedenen Meßwerten zugeordnete Skalenbereiche (25, 26) umfaßt, über die ein gemeinsamer Zeiger (5) rotiert, und die Einschaltphasen der Lichtquelle meßwertabhängig so gesteuert sind, daß abwechselnd eine Zeigerposition über dem einen oder dem anderen Skalenbereich beleuchtbar ist.

9. Vorrichtung nach Anspruch 8, dadurch gekennzeichnet,
daß den verschiedenen Skalenbereichen (25, 26) Lichtquellen (14, 15) unterschiedlicher Farbe zugeordnet sind.
